# EUROPÄISCHE PATENTANMELDUNG

(11) **EP 1 500 541 A1**
(43) Veröffentlichungstag der Anmeldung: **26.01.2005**
(21) Anmeldenummer: 04016384.2
(22) Anmeldetag: 13.07.2004
(51) Int. Cl.: B60J 7/06, B60J 7/20, B60J 7/12

(54) **Kraftfahrzeug**

(30) Priorität: 19.07.2003 DE 10332944
(71) Anmelder: DaimlerChrysler AG, 70567 Stuttgart (DE)
(72) Erfinder: Marold, Adolf, 71139 Ehningen (DE); Moll, Ulrich, 71134 Aidlingen (DE); Zipperle, Siegfried, 71134 Aidlingen (DE)

(57) **Zusammenfassung**

Die Erfindung betrifft ein Kraftfahrzeug (1), insbesondere ein zweisitziges Cabriolet, mit einem zu öffnenden Schiebe-Softtop (2), welches in geschlossenem Zustand eine Dachöffnung (16) zwischen einer A-Säule und einer B-Säule verdeckt und welches in geöffnetem Zustand in einen Stauraum (10) eingefahren ist, welcher hinter den Fahrzeugsitzen (8) und vor einer Schottwand (11) angeordnet ist, wobei das Schiebe-Softtop (2) eine in Fahrtrichtung vorne gelegene erste Dachlamelle (4) und eine in Fahrtrichtung hinten gelegene zweite Dachlamelle (6) aufweist, mit zwei seitlichen Führungsschienen (9), an denen die beiden Dachlamellen (4,6) zum Verstellen des Schiebe-Softtops (2) zwischen dem geöffneten und dem geschlossenen Zustand und umgekehrt verschiebbar gelagert sind, wobei eine Stoffdachbahn (3) an einem vorderen Ende mit der ersten Dachlamelle (4) und an einem hinteren Ende mit der zweiten Dachlamelle (6) verbunden ist, und wobei ein Abstand zwischen der ersten Dachlamelle (4) und der zweiten Dachlamelle (6) bei geöffnetem Schiebe-Softtop (2) geringer ist als bei geschlossenem Schiebe-Softtop (2).

## Beschreibung

Die Erfindung betrifft ein Kraftfahrzeug, insbesondere ein zweisitziges Cabriolet, mit einem zu öffnenden Schiebe-Softtop.

Aus der EP 0 857 597 A1 ist ein Kraftwagen mit einem zu öffnenden Verdeck bekannt, das im geschlossenen Zustand den Innenraum des Kraftwagens zwischen vorderer Windschutzscheibe und einem hinteren, mit seitlichen Säulen einen Überrollbügel bildenden Dachabschnitt überdeckt und in geöffnetem Zustand nach Verkürzung seiner Länge in einen Stauraum der Karosserie abgesenkt ist, wobei der Kraftwagen einen oberhalb der Bordwandoberkante geschlossenen Dachbereich aufweist. Am rückwärtigen Abschluss der Karosserie des Personenkraftwagens ist eine steile Rückwand angeordnet, die ein Steilheck ausbildend oberhalb der Bordwandoberkante an den Dachabschnitt angrenzt. Zudem ist ein das Verdeck zumindest überwiegend aufnehmender Stauraum in einer steil geneigten Fahrzeugquerebene der Karosserie hinter dem Fahrgastabschnitt des Innenraums und in einem Abstand vor der Rückwand vorgesehen.

Aus der DE 43 24 708 C2 ist ein versenkbares Dach für Fahrzeuge, insbesondere für zweisitzige Cabriolets, bekannt, mit einer eine Dachplatte und hintere Dachpfosten aufweisenden Dachschale, die mit den Dachpfosten voran der Länge nach in einen Unterbringungsraum zwischen seitlichen Bordwänden der Karosserie hinein bewegbar ist. Das versenkbare Fahrzeugdach ist in dem Unterbringungsraum in einer Fahrzeugquerebene aufgerichtet gehalten und mit einer Heckscheibe für eine von den Dachpfosten seitlich und von-der Bachplatte oben begrenzte Fensteröffnung versehen und mit Führungsmitteln zur Bewegungssteuerung der Dachschale und Heckscheibe aus ihrer Gebrauchsstellung in eine Nichtgebrauchsstellung bewegungsgesteuert. Die Dachschale ist dabei über seitlich im Unterbringungsraum angeordnete Schiebeführungen absenkgesteuert, wobei die Schiebeführungen unabhängig von den Führungsmitteln der Heckscheibe angeordnet sind und wobei die Heckscheibe über ihr zugeordnete Schiebeführungsmittel längsverschiebbar an der Dachschale gelagert ist. Die Scheibe und die Dachschale sind dabei durch einen motorischen Antrieb zwischen ihrer Gebrauchsstellung und ihrer Nichtgebrauchsstellung verfahrbar, wobei die Heckscheibe und eine im unteren Randbereich der Scheibenfläche verlaufende Achse schwenkschiebebeweglich in seitlichen Führungen läuft und in ihrem oberen Randbereich gelenkig mit einem Transportschlitten verbunden ist, der zum Schiebeantrieb der Heckscheibe entlang einer sich in Längsrichtung der Dachplatte erstreckenden Führungsschiene verfahrbar ist.

Aus der DE 44 46 799 C2 ist eine verschwenkbare Dacheinheit für Fahrzeuge, insbesondere für Personenkraftfahrzeuge, bekannt, die im aufgesetzten Zustand mit einem die Frontscheibe tragenden Rahmen verbindbar ist und die Fahrgastzelle über spannt und durch Verschwenken in einen Stauraum des Fahrzeugs hinter dem Fahrer- und Beifahrersitz oder den Rücksitzen bzw. hinter einer Sitzreihe versenkbar ist. Dabei sind an den beiden Seiten der Dacheinheit in den Stauraum greifende Führungseinrichtungen angeordnet, die die Dacheinheit in der einen und der anderen Stellung fixieren und bei der Bewegung aus der geschlossenen in die geöffnete Stellung und umgekehrt führen. Die Dacheinheit ist hierbei schmaler als die hintere Karosseriebreite und im versenkten Zustand in einem in etwa vertikal verlaufenden Stauraum quer zur Fahrzeuglängsachse hinter dem Fahrer- und Beifahrersitz bzw. der Sitzreihe mit der Vorderkante voran hängend untergebracht.

Die vorliegende Erfindung beschäftigt sich mit dem Problem, für ein Schiebe-Softtop eines Kraftfahrzeugs eine verbesserte Ausführungsform anzugeben, die es insbesondere ermöglicht, dieses einfach und schnell von einem geöffneten in einen geschlossenen Zustand und umgekehrt zu überführen, wobei das Schiebe-Softtop im geöffneten Zustand platzsparend im Fahrzeug verstaubar sein soll.

Diese Aufgabe wird durch den Gegenstand des unabhängigen Anspruchs gelöst, vorteilhafte Ausgestaltungen sind Gegenstand der abhängigen Ansprüche.

Die Erfindung beruht auf dem allgemeinen Gedanken, ein zu öffnendes, verschiebbar gelagertes Schiebe-Softtop, welches in geschlossenem Zustand eine Dachöffnung zwischen einer A-Säule und einer B-Säule verdeckt und welches in geöffnetem Zustand in einen Stauraum eingefahren ist, zusammenschiebbar auszubilden, so dass es in geöffnetem Zustand eine gestauchte und platzsparende Lage im Stauraum einnimmt. Das Schiebe-Softtop weist hierzu eine in Fahrtrichtung vorne gelegene erste Dachlamelle und eine in Fahrtrichtung hinten gelegene zweite Dachlamelle auf sowie zumindest einen zwischen diesen beiden Dachlamellen angeordneten Spriegel, welcher zum Spannen einer Stoffdachbahn ausgebildet ist. Die beiden Dachlamellen und der zumindest eine Spriegel können zum Verstellen des Schiebe-Softtops zwischen dem geöffneten und dem geschlossenen Zustand entlang zweier seitlicher Führungsschienen verschoben werden. Beim Verstellen des Schiebe-Softtops vom geschlossenen Zustand in den geöffneten Zustand, wird dieses in den Stauraum eingefahren und in Verschieberichtung gestaucht, so dass ein Abstand zwischen der ersten und der zweiten Dachlamelle bei geöffnetem Schiebe-Softtop geringer ist als bei geschlossenen Schiebe-Softtop.

Dies bietet den Vorteil, dass sich das Volumen des Schiebe-Softtops durch ziehharmonikaartiges Zusammenstauchen im geöffneten Zustand verkleinert und dadurch das Schiebe-Softtop in dem Stauraum, welcher sich gemäß einer besonders günstigen Ausführungsform im wesentlichen entlang einer rückwärtigen Sitzkontur und quer zur Fahrzeuglängsachse hinter den Fahrzeugsitzen und vor einer Schottwand erstreckt, mit der zweiten Lamelle voran untergebracht werden kann. Damit ist es möglich, mit wenigen Handgriffen die Dachöffnung des Kraftfahrzeugs zu öffnen oder zu verdecken und das Schiebe-Softtop im Nichtgebrauchszustand, also im geöffneten Zustand, platzsparend und aerodynamisch günstig im Fahrzeug zu verstauen.

Zweckmäßig sind die Abmessungen des Stauraums und des Schiebe-Softtops im Nichtgebrauchszustand so aufeinander abgestimmt, dass die erste Dachlamelle bei im Stauraum untergebrachten Schiebe-Softtop unterhalb und in Fahrtrichtung vor einer Heckscheibe angeordnet ist. Im Nichtgebrauchszustand kann dadurch das Softtop hinter den Fahrzeugsitzen verstaut werden, ohne dass es in der Höhe soweit aufragt, dass es die Sicht durch die Heckscheibe behindern würde. Dadurch wird erreicht, dass das Schiebe-Softtop im Nichtgebrauchszustand in dem dafür vorgesehenen Stauraum mitgeführt werden kann und gleichzeitig die freie Sicht durch die Heckscheibe gewährleistet ist, was die Fahrsicherheit erhöht. Gleichzeitig wird ein Volumen eines eventuell hinter der Schottwand angeordneten Laderaums nicht durch das Schiebe-Softtop beeinträchtigt, so dass auch bei geöffnetem Verdeck das komplette Laderaumvolumen zur Verfügung steht.

Eine vorteilhafte Weiterbildung ist dadurch gekennzeichnet, dass zwei seitliche Führungsschienen vorgesehen sind, welche jeweils einen Seitenholm, der zwischen der A-Säule und der B-Säule angeordnet ist, und einen karosseriefesten Holm aufweisen, welcher im wesentlichen im Anschluss an den Seitenholm und entlang einer rückwärtigen Sitzkontur angeordnet ist. Der karosseriefeste Holm kann dabei gerade oder S-förmig ausgebildet sein. An den Führungsschienen sind der zumindest eine Spriegel und die beiden Dachlamellen zum Verstellen des Schiebe-Softtops zwischen dem geöffneten und dem geschlossenen Zustand und umgekehrt leicht verschiebbar gelagert. Dies ermöglicht ein leichtes und zuverlässiges Schließen bzw. Öffnen des Schiebe-Softtops und erhöht dadurch die Bedienfreundlichkeit. Zudem kann vorgesehen sein, die Seitenholme abnehmbar auszubilden. Derartige Seitenholme erhöhen zusätzlich den Cabriolet-Charakter und sind günstiger Weise zusätzlich zu dem Schiebe-Softtop leicht in dem Stauraum unterzubringen. Die Seitenholme sind hierzu über ein an ihren jeweiligen Längsenden angeordnetes und leicht bedienbares Verschlusselement einfach mit der A- bzw. B-Säule des Fahrzeugs zu verbinden oder von diesen zu lösen. Dies gewährleistet, dass sowohl das Öffnen als auch das Schließen des Schiebe-Softtops durch ein einfaches Einsetzen der Seitenholme in den dafür vorgesehenen Bauraum bzw. ein Abnehmen ermöglicht wird.

Prinzipiell kann vorgesehen sein, dass eine Veränderung des Abstandes zwischen der ersten und der zweiten Dachlamelle beim Öffnen des Schiebe-Softtops erst erfolgt, wenn die zweite Dachlamelle ein unteres Ende des karosseriefesten Holms erreicht hat. Dies bedeutet, dass das Falten der Stoffbahn des Schiebe-Softtops erst hinter den Fahrzeugsitzen erfolgt und dass sich das Schiebe-Softtop im Bereich der Dachöffnung stets in gespanntem Zustand befindet. Dies wirkt sich insbesondere auf ästhetische und designerische Gesichtspunkte positiv aus.

Gemäß einer bevorzugten Ausführungsform der Erfindung sind die Spriegel und die beiden Dachlamellen gewölbt ausgebildet. Dies bewirkt eine Vergrößerung der Kopffreiheit und damit eine Erhöhung des Fahrkomforts durch ein größeres Platzangebot im Kopfbereich des Fahrers bzw. des Beifahrers.

Zweckmäßig kann zum Öffnen und/oder Schließen des Schiebe-Softtops eine Antriebseinrichtung vorgesehen sein. Die verschiebbare Lagerung an den Führungsschienen bewirkt ein einfaches und schnelles Öffnen und/oder Schließen des Schiebe-Softtops von Hand. Um den Bedienungskomfort weiter zu steigern, kann die oben erwähnte Antriebseinrichtung vorgesehen sein, durch welche das Softtop sich auf einen Steuerungsbefehl hin automatisch öffnet und/oder schließt. Bei Vorhandensein einer Antriebseinrichtung zum automatischen Öffnen und/oder Schließen des Schiebe-Softtops kann zusätzlich vorgesehen sein, dass das Schiebe-Softtop mittels einer manuellen Notöffnungseinrichtung unabhängig von der Antriebseinrichtung geöffnet bzw. geschlossen werden kann. Dies gewährleistet insbesondere in Notsituationen, beispielsweise bei einem Unfall, dass bei einer klemmenden seitlichen Fahrzeugtür, unabhängig vom Funktionieren der Antriebseinrichtung, ein Öffnen des Schiebe-Softtops und damit ein rettender Ausstieg durch die Dachöffnung möglich ist.

Eine besonders günstige Weiterbildung der erfindungsgemäßen Lösung ist durch eine verschwenkbare zweite Dachlamelle gekennzeichnet, welche sich bei geschlossenem Schiebe-Softtop in eine Lüftungsstellung verschwenken lässt. Bei in Lüftungsstellung verschwenkter zweiter Dachlamelle wird der Fahrgastraum zusätzlich belüftet, ohne dass dadurch jedoch ein unangenehmes Zuggefühl im Fahrzeuginneren auftritt.

Weitere wichtige Merkmale und Vorteile der Erfindung ergeben sich aus den Unteransprüchen, aus den Zeichnungen und aus den zugehörigen Figurenbeschreibungen anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in den nachfolgenden Beschreibungen näher erläutert, wobei sich Bezugszeichen auf gleiche oder ähnliche oder funktional gleiche Bauteile beziehen.

Dabei zeigen:
- Fig. 1: einen Längsschnitt durch das erfindungsgemäße Fahrzeug mit einem Schiebe-Softtop im geöffneten und geschlossenen Zustand,
- Fig. 2: eine perspektivische Ansicht des Schiebe-Softtops im geöffneten Zustand,
- Fig. 3: eine perspektivische Ansicht wie in Fig. 2, jedoch mit einem Schiebe-Softtop im geschlossenen Zustand.

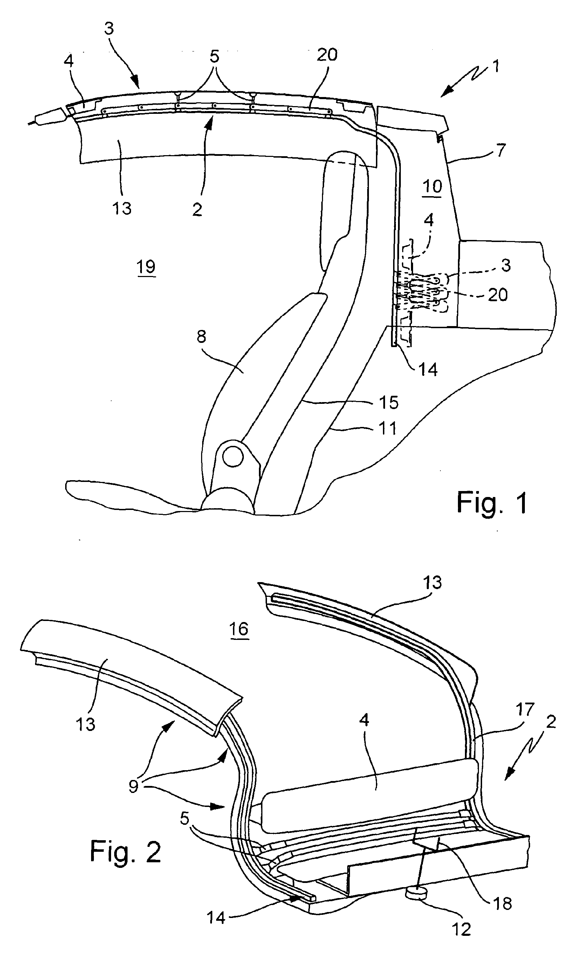

Entsprechend den Fig. 1 weist ein erfindungsgemäßes Kraftfahrzeug 1 ein zu öffnendes Schiebe-Softtop 2 auf, welches in geschlossenem Zustand eine zwischen nicht dargestellten A-und B-Säulen gelegene Dachöffnung 16 verdeckt. Das Schiebe-Softtop 2 weist eine in Fahrtrichtung vorne gelegene erste Dachlamelle 4, zumindest einen, hier zwei, Spriegel 5 zum Spannen einer Stoffdachbahn 3 sowie eine in Fahrtrichtung hinten gelegene zweite Dachlamelle 6 auf.

Gemäß den Fig. 1 bis 3 sind jeweils zwei Spriegel 5 eingezeichnet, welche ebenso wie die zweite Dachlamelle 6 zweckmäßig gewölbt ausgebildet sind. Prinzipiell ist jedoch aber auch eine Ausführungsvariante mit nur einem oder mit mehr als zwei Spriegeln 5 denkbar. Die Stoffdachbahn 3 ist an einem vorderen Ende mit der ersten Dachlamelle 4 und an einem hinteren Ende mit der zweite Dachlamelle 6 verbunden. Die Stoffdachbahn 3 ist außerdem mit den Spriegeln 5 verbunden, beispielsweise vernäht und/oder verklebt. Die beiden Spriegel 5 sowie die beiden Dachlamellen 4,6 können an zwei seitlichen Führungsschienen 9 gelagert sein, welche einen seitlichen Längsrand des Schiebe-Softtops 2 bilden.

Gemäß Fig. 1 ist hinter einem Fahrzeugsitz 8 bzw. einer Sitzreihe und vor einer Schottwand 11, welche einen Fahrgastraum 19 nach hinten begrenzt, ein Stauraum 10 angeordnet, welcher zur Aufnahme des Schiebe-Softtops 2 dient und sich im wesentlichen entlang einer rückwärtigen Sitzkontur 15 quer zur Fahrzeuglängsachse erstreckt. Im geöffneten Zustand gemäß Fig. 2 kann das Schiebe-Softtop 2 mit der zweiten Dachlamelle 6 voran in dem Stauraum 10 untergebracht, beispielsweise versenkt, werden. Dabei sind die Abmessungen des Stauraums 10 und des Schiebe-Softtops 2 so aufeinander abgestimmt, dass die erste Dachlamelle 4 bei im Stauraum 10 untergebrachten Schiebe-Softtop 2 unterhalb und in Fahrtrichtung vor einer Heckscheibe 7 angeordnet ist. Dies bietet den Vorteil, dass bei geöffnetem und im Stauraum 10 untergebrachtem Schiebe-Softtop 2 eine ungehinderte Sicht durch die Heckscheibe 7 gewährleistet wird und sich dadurch die Fahrsicherheit erhöht. Gleichzeitig wird ein Volumen eines eventuell hinter der Schottwand 11 angeordneten Laderaums nicht durch das Schiebe-Softtop 2 beeinträchtigt, so dass auch bei geöffnetem Softtop 2 das komplette Laderaumvolumen zur Verfügung steht. Durch das Einfahren des Schiebe-Softtops 2 in den Stauraum 10 ist zudem eine aerodynamisch günstige Lage des Schiebe-Softtops 2 im geöffneten Zustand gegeben.

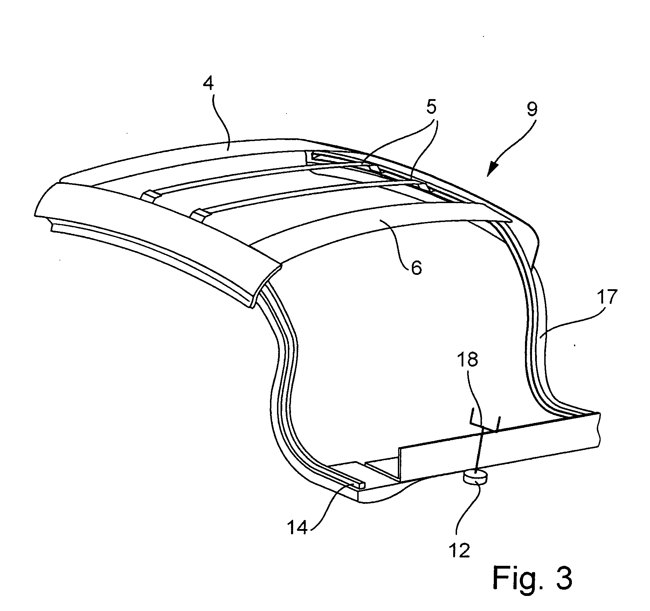

Erfindungsgemäß sind die einzelnen Komponenten des Scheibe-Softtops 2 kinematisch so miteinander gekoppelt, dass sich beim Öffnen des Schiebe-Softtops 2 ein Abstand zwischen der ersten Dachlamelle 4 und der zweiten Dachlamelle 6 verringert, so dass das Schiebe-Softtop 2 in geöffnetem Zustand eine gestauchte Lage im Stauraum 10 einnimmt. Die Änderung des Abstandes zwischen der ersten Dachlamelle 4 und der zweiten Dachlamelle 6 erfolgt dabei vorzugsweise im Bereich eines karosseriefesten Holms 17, welcher ein Bestandteil der seitlichen Führungsschienen 9 ist und welcher im wesentlichen im Anschluss an einen Seitenholm 13 und entlang einer rückwärtigen Sitzkontur 15 angeordnet ist. Der Seitenholm 13 ist dabei ebenfalls ein Bestandteil der seitlichen Führungsschienen 9 und zwischen einer A-Säule und einer B-Säule angeordnet. Günstiger Weise erfolgt die Veränderung des Abstandes zwischen der ersten und der zweiten Dachlamelle 6 beim Öffnen des Schiebe-Softtops 2 durch eine geeignete kinematische Kopplung erst, wenn die zweite Dachlamelle 6 einen unteren Endpunkt 14 des karosseriefesten Holms 17 erreicht. Der karosseriefeste Holm 17 kann entweder einen geraden (vgl. Fig. 1) oder einen zumindest im oberen Bereich S-förmigen Verlauf (vgl. Fig. 2 und 3) aufweisen. Die beiden Seitenholme 13 können abnehmbar ausgebildet sein, so dass der Cabriolet-Charakter des Fahrzeugs 1 zusätzlich verstärkt wird und lassen sich auch bei geöffnetem Schiebe-Softtop 2 einfach und praktisch zweckmäßig im Stauraum 10 mitführen.

Gemäß Fig. 1 kann zwischen der ersten Dachlamelle 4 und der zweiten Dachlamelle 6 eine Distanzeinrichtung 20 angeordnet sein, welche beim Öffnen des Schiebe-Softtops 2 eine Veränderung des Abstandes zwischen der ersten und der zweiten Dachlamelle 6 verhindert, bis die zweite Dachlamelle 6 den unteren Endpunkt 14 des karosseriefesten Holms 17 erreicht. Die Distanzeinrichtung 20 kann nicht näher bezeichnete Distanzelemente, bspw. Scherenelemente oder Distanzkabel mit Kupplungselementen, aufweisen, welche sich bei geöffnetem Schiebe-Softtop 2 zickzackförmig aneinander legen und somit eine Stauchung des Schiebe-Softtops 2 bewirken, während sie bei geschlossenem Schiebe-Softtop 2 parallel zueinander angeordnet sind und dadurch das Schiebe-Softtop 2 bzw. die Stoffdachbahn 3 spannen.

Des Weiteren kann gemäß den Fig. 2 und 3 zum Öffnen und/oder Schließen des Schiebe-Softtops 2 eine Antriebseinrichtung 12 vorgesehen sein, welche das Schiebe-Softtop 2 auf einen Steuerungsbefehl hin automatisch öffnet und/oder schließt. Zusätzlich zur Antriebseinrichtung 12 kann eine manuelle Notöffnungseinrichtung 18 vorgesehen sein, welche beim Ausfall der Antriebseinrichtung 12 oder in anderen Notsituationen, beispielsweise bei Unfällen, ein manuelles Öffnen des Schiebe-Softtops 2 erlaubt.

Gemäß den Fig. 1 bis 3 weisen die beiden Dachlamellen 4 und 6 sowie die beiden Spiegel 5 eine gewölbte Form auf, welche die Kopffreiheit der Fahrzeuginsassen bei geschlossenem Schiebe-Softtop 2 erhöhen und dadurch den Fahrkomfort steigern. Zur Verbesserung der Belüftung des Fahrgastraums 19 kann zusätzlich bei geschlossenem Schiebe-Softtop 2 die zweite, d.h. die hintere Dachlamelle 6 in eine Lüftungsstellung verschwenkt werden. Das Verschwenken der zweiten Dachlamelle 6 geschieht dabei analog zu einem Verschwenken eines herkömmlichen Schiebe-Hebedaches und gewährleistet einen ausreichenden Zustrom von Frischluft zum Fahrgastraum 19, ohne jedoch ein unangenehmes Zuggefühl hervorzurufen.

Zusammenfassend lassen sich die wesentlichen Merkmale der erfindungsgemäßen Lösung wie folgt charakterisieren:

Die Erfindung sieht vor, ein zu öffnendes und verschiebbar gelagertes Schiebe-Softtop 2, welches in geschlossenem Zustand eine Dachöffnung 16 verdeckt und welches in geöffnetem Zustand in einen Stauraum 10 eingefahren ist, zusammenschiebbar auszubilden, so dass es in geöffnetem Zustand eine platzsparende und gestauchte Lage im Stauraum 10 einnimmt. Das Schiebe-Softtop 2 weist eine erste Dachlamelle 4, eine zweite Dachlamelle 6 sowie zumindest einen Spriegel 5 auf, welcher zum Spannen einer Stoffdachbahn 3 ausgebildet ist.

Die beiden Dachlamellen 4 und 6 sowie der Spriegel 5 können zum Verstellen des Schiebe-Softtops 2 zwischen dem geöffneten und dem geschlossenen Zustand entlang zweier seitlicher Führungsschienen 9 verschoben werden. Die Führungsschienen 9 weisen jeweils einen abnehmbaren Seitenholm 13 und einen karosseriefesten Holm 17 auf.

Die Spriegel 5 und die beiden Dachlamellen 4 und 6 können gewölbt ausgebildet sein und erhöhen damit die Kopffreiheit und den Fahrkomfort der Fahrzeuginsassen.

Zusätzlich kann die zweite Dachlamelle 6 verschwenkbar ausgebildet sein und sich bei geschlossenem Schiebe-Softtop 2 in eine Lüftungsstellung verschwenken lassen.

## Patentansprüche

1. Kraftfahrzeug (1), insbesondere ein zweisitziges Cabriolet,
- mit einem zu öffnenden Schiebe-Softtop (2), welches in geschlossenem Zustand eine Dachöffnung (16) zwischen einer A-Säule und einer B-Säule verdeckt und welches in geöffnetem Zustand in einen Stauraum (10) eingefahren ist, welcher hinter den Fahrzeugsitzen (8) und vor einer Schottwand (11) angeordnet ist,
- wobei das Schiebe-Softtop (2) eine in Fahrtrichtung vorne gelegene erste Dachlamelle (4) und eine in Fahrtrichtung hinten gelegene zweite Dachlamelle (6) aufweist,
- mit zwei seitlichen Führungsschienen (9), an denen die beiden Dachlamellen (4,6) zum Verstellen des Schiebe-Softtops (2) zwischen dem geöffneten und dem geschlossenen Zustand und umgekehrt verschiebbar gelagert sind,
- wobei eine Stoffdachbahn (3) an einem vorderen Ende mit der ersten Dachlamelle (4) und an einem hinteren Ende mit der zweiten Dachlamelle (6) verbunden ist, und
- wobei ein Abstand zwischen der ersten Dachlamelle (4) und der zweiten Dachlamelle (6) bei geöffnetem Schiebe-Softtop (2) geringer ist als bei geschlossenem Schiebe-Softtop (2).

2. Kraftfahrzeug nach Anspruch 1,
**dadurch gekennzeichnet,**
**dass** das Schiebe-Softtop (2) zumindest einen zwischen der ersten Dachlamelle (4) und der zweiten Dachlamelle (6) angeordneten Spriegel (5) zum Spannen der Stoffdachbahn (3) aufweist, der ebenfalls an den seitlichen Führungsschienen (9) verschiebbar gelagert ist.

3. Kraftfahrzeug nach Anspruch 1 oder 2,
**dadurch gekennzeichnet,**
**dass** die seitlichen Führungsschienen (9) jeweils einen Seitenholm (13), welcher zwischen der A-Säule und der B-Säule angeordnet ist, und einen karosseriefesten Holm (17) aufweisen, welcher im wesentlichen im Anschluss an den Seitenholm (13) und entlang einer rückwärtigen Sitzkontur (15) angeordnet ist.

4. Kraftfahrzeug nach Anspruch 3,
**dadurch gekennzeichnet,**
**dass** eine Veränderung des Abstandes zwischen der ersten Dachlamelle (4) und der zweiten Dachlamelle (6) im Bereich des karosseriefesten Holms (17) erfolgt.

5. Kraftfahrzeug nach einem der Ansprüche 3 oder 4,
**dadurch gekennzeichnet,**
**dass** eine Veränderung des Abstandes zwischen der ersten und der zweiten Dachlamelle (6) beim Öffnen des Schiebe-Softtops (2) erst erfolgt, wenn die zweite Dachlamelle (6) einen unteren Endpunkt (14) des karosseriefesten Holms (17) erreicht.

6. Kraftfahrzeug nach einem der Ansprüche 1 bis 5,
**dadurch gekennzeichnet,**
**dass** zwischen der ersten und der zweiten Dachlamelle (6) eine Distanzeinrichtung (20) angeordnet ist, welche beim Öffnen des Schiebe-Softtops (2) eine Veränderung des Abstandes zwischen der ersten und der zweiten Dachlamelle (6) verhindert, bis die zweite Dachlamelle (6) einen unteren Endpunkt (14) des karosseriefesten Holms (17) erreicht.

7. Kraftfahrzeug nach einem der Ansprüche 3 bis 6,
**dadurch gekennzeichnet,**
**dass** die Seitenholme (13) abnehmbar ausgebildet sind.

8. Kraftfahrzeug nach einem der Ansprüche 1 bis 7,
**dadurch gekennzeichnet,**
**dass** der Stauraum (10) sich im wesentlichen entlang der rückwärtigen Sitzkontur (15) und quer zur Fahrzeuglängsachse erstreckt.

9. Kraftfahrzeug nach einem der Ansprüche 1 bis 8,
**dadurch gekennzeichnet,**
**dass** die Abmessungen des Stauraums (10) und des Schiebe-Softtops (2) im geöffneten Zustand so aufeinander abgestimmt sind, dass die erste Dachlamelle (4) bei im Stauraum (10) untergebrachten Schiebe-Softtop (2) unterhalb und in Fahrtrichtung vor einer Heckscheibe (7) angeordnet ist.

10. Kraftfahrzeug zumindest nach Anspruch 2,
**dadurch gekennzeichnet,**
**dass** der zumindest eine Spriegel (5) mit der Stoffdachbahn (3) verbunden ist.

11. Kraftfahrzeug nach einem der Ansprüche 1 bis 10,
**dadurch gekennzeichnet,**
**dass** zum Öffnen und/oder Schließen des Schiebe-Softtops (2) eine Antriebseinrichtung (12) vorgesehen ist.

12. Kraftfahrzeug nach einem der Ansprüche 1 bis 11,
**dadurch gekennzeichnet,**
**dass** zum Öffnen und/oder Schließen des Schiebe-Softtops (2) eine manuelle Notöffnungseinrichtung (18) vorgesehen ist.

13. Kraftfahrzeug nach einem der Ansprüche 1 bis 12,
**dadurch gekennzeichnet,**
**dass** der/die Spriegel (5) und/oder die beiden Dachlamellen (4,6) gewölbt ausgebildet sind.

14. Kraftfahrzeug nach einem der Ansprüche 1 bis 14,
**dadurch gekennzeichnet,**
**dass** bei geschlossenem Schiebe-Softtop (2) die zweite Dachlamelle (6) in eine Lüftungsstellung verschwenkbar ist.
